# EUROPEAN PATENT APPLICATION

(11) **EP 3 522 149 A1**
(43) Date of publication of application: **07.08.2019**
(21) Application number: 16917212.9
(22) Date of filing: 29.09.2016
(51) Int. Cl.: G09G 5/14

(54) **ELECTRONIC DEVICE**

(71) Applicant: Shenzhen Royole Technologies Co., Ltd., Shenzhen, Guangdong 518172 (CN)
(72) Inventor: WU, Dan, Shenzhen Guangdong 518052 (CN); WU, Weifeng, Shenzhen Guangdong 518052 (CN)
(74) Representative: Papa, Elisabetta
(86) International application number: PCT/CN2016/100887
(87) International publication number: WO 2018/058458

(57) **Abstract**

An electronic device (100) includes a first display module (10) and a second display module (20). The first display module (10) includes a first display surface (11). The second display module (20) includes a second display surface (21). The first display surface (11) and the second display surface (21) face the same side of the electronic device (100). The second display module (20) is slidably connected and stacked to the first display module (10), and an area of a display surface (111) of the electronic device (100) formed by the first display surface (11) and the second display surface (21) by adjusting overlapping degree between the second display module (20) and the first display module (10). A size of the display area of the electronic device (100) is adjustable, such that the size of the display area of the electronic device (100) can be adjusted depending on specific requirements to meet different information display demands, thereby improving user experience.

## Description

### FIELD

The present disclosure relates to a field of terminals, and more particularly to an electronic device.

### BACKGROUND

In the related art, an electronic device includes a display screen with a fixed size, and it is difficult to adjust a size of the display screen depending on requirements.

### SUMMARY

The present disclosure seeks to solve at least one of the problems existing in the related art. To this end, the present disclosure provides an electronic device.

The electronic device according to embodiments of the present disclosure includes a first display module and a second display module. The first display module includes a first display surface. The second display module includes a second display surface. The first display surface and the second display surface face the same side of the electronic device. The second display module is slidably connected and stacked to the first display module, and the electronic device is configured to adjust an area of a display surface of the electronic device formed by the first display surface and the second display surface by adjusting an overlapping degree between the second display module and the first display module.

In the electronic device according to embodiments of the present disclosure, since the first display module is slidably connected and stacked to the second display module, and the area of the display surface of the electronic device can be adjusted by adjusting the overlapping degree between the first display module and the second display module, a size of the display area of the electronic device is adjustable, such that the size of the display area of the electronic device can be adjusted depending on specific requirements to meet different information display demands, thereby improving user experience.

In an embodiment, the first display module includes a sliding slot, the second display module includes a sliding rail, and the sliding rail is slidably received in the sliding slot to adjust the overlapping degree.

In an embodiment, the first display module includes a first cover, the first display surface is located at the first cover, the sliding slot is defined in two sides of a bottom surface of the first cover, and the bottom surface of the first cover faces away from the first display surface; the second display module includes a second cover, the second display surface is located at a top surface of the second cover, the sliding rail is located at two sides of the top surface of the second cover, and the sliding rail is spaced apart from the second display surface.

In an embodiment, the first display module includes a first display screen, a top surface of the first cover defines a first groove therein, the first display screen is received in the first groove, and the first display screen includes the first display surface; the second display module includes a second display screen, the top surface of the second cover defines a second groove therein, the second display screen is received in the second groove, and the second display screen includes the second display surface.

In an embodiment, the electronic device includes a flexible printed circuit board, and the flexible printed circuit board is electrically connected to the first display module and the second display module.

In an embodiment, the second cover includes a mounting region, the mounting region is located at a side of the second groove, and the sliding rail is located at the mounting region.

In an embodiment, the first display module is a flexible display module and has a shape bent in a circular arc, the second display module is a flexible display module and has a shape bent in circular arc, and a bending direction of the first display module is the same with a bending direction of the second display module.

In an embodiment, a bending curvature of the first display module is the same with a bending curvature of the second display module.

In an embodiment, the second display module is slidable between a first position and a second position relative to the first display module to adjust the overlapping degree, and the area of the display surface of the electronic device formed by the first display surface and the second display surface when the second display module is in the first position is smaller than the area of the display surface of the electronic device formed by the first display surface and the second display surface when the second display module is in the second position.

In an embodiment, a display area of the first display surface is greater than a display area of the second display surface.

In an embodiment, the electronic device includes a sensor and a control device, the sensor is configured to detect the overlapping degree between the second display module and the first display module, and the control device is configured to control a display content of the display surface of the electronic device formed by the second display surface and the first display surface.

In an embodiment, the electronic device includes a third display module, and the third display module includes a third display surface, the third display module is slidably connected and stacked between the first display module and the second display module, the electronic device is configured to adjust an area of a display surface of the electronic device formed by the first display surface, the second display surface and the third display surface by adjusting the overlapping degree among the second display module, the third display module and the first display module.

In an embodiment, the first display module is slidably connected to the third display module by means of fitting a sliding slot with a sliding rail, and the second display module is slidably connected to the third display module by means of fitting another sliding slot with another sliding rail.

Additional aspects and advantages of embodiments of present disclosure will be given in part in the following descriptions, become apparent in part from the following descriptions, or be learned from the practice of the embodiments of the present disclosure.

### BRIEF DESCRIPTION OF THE DRAWINGS

These and other aspects and advantages of embodiments of the present disclosure will become apparent and more readily appreciated from the following descriptions made with reference to the drawings, in which:
Fig. 1 is a perspective view of an electronic device of an embodiment of the present disclosure.
Fig. 2 is another perspective view of an electronic device of an embodiment of the present disclosure.
Fig. 3 is a partially exploded view of an electronic device according to an embodiment of the present disclosure.
Fig. 4 is another partially exploded view of an electronic device according to an embodiment of the present disclosure.
Fig. 5 is an exploded view of an electronic device according to an embodiment of the present disclosure.
Fig. 6 is another exploded view of an electronic device according to an embodiment of the present disclosure.
Fig. 7 is an exploded view of a first display module of an electronic device according to an embodiment of the present disclosure.
Fig. 8 is an exploded view of a second display module of an electronic device according to an embodiment of the present disclosure.
Fig. 9 is a schematic view of partial modules of an electronic device according to an embodiment of the present disclosure.
Fig. 10 is a partially exploded view of an electronic device including a third display module according to an embodiment of the present disclosure.
Fig. 11 is an exploded view of a third display module of an electronic device according to an embodiment of the present disclosure.
Fig. 12 is a perspective view of an electronic device including a third display module according to an embodiment of the present disclosure.
Fig. 13 is another perspective view of an electronic device including a third display module according to an embodiment of the present disclosure.
Fig. 14 is still another perspective view of an electronic device including a third display module according to an embodiment of the present disclosure.
Fig. 15 is yet another perspective view of an electronic device including a third display module according to an embodiment of the present disclosure.

### DETAILED DESCRIPTION

Embodiments of the present disclosure will be described in detail and examples of the embodiments will be illustrated in the drawings, where same or similar reference numerals are used to indicate same or similar members or members with same or similar functions. The embodiments described herein with reference to drawings are explanatory, illustrative, and used to generally understand the present disclosure. The embodiments shall not be construed to limit the present disclosure.

In the specification, it is to be understood that terms such as "central," "longitudinal," "lateral," "length," "width," "thickness," "upper," "lower," "front," "rear," "left," "right," "vertical," "horizontal," "top," "bottom," "inner," "outer," "clockwise," and "counterclockwise," should be construed to refer to the orientation as then described or as shown in the drawings under discussion. These relative terms are for convenience of description and do not require that the present disclosure be constructed or operated in a particular orientation. In addition, terms such as "first" and "second" are used herein for purposes of description and are not intended to indicate or imply relative importance or significance. Thus, features limited by "first" and "second" are intended to indicate or imply including one or more than one these features. In the description of the present disclosure, "a plurality of' means two or more than two, unless specified otherwise.

In the description of the present disclosure, unless specified or limited otherwise, it should be noted that, terms "mounted," "connected" and "coupled" may be understood broadly, such as permanent connection or detachable connection, electronic connection or mechanical connection, direct connection or indirect connection via intermediary, inner communication or interaction between two elements. The above terms can be understood by those skilled in the art according to specific situations.

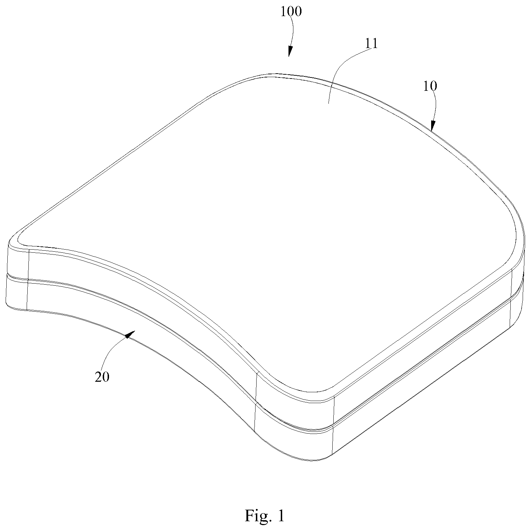

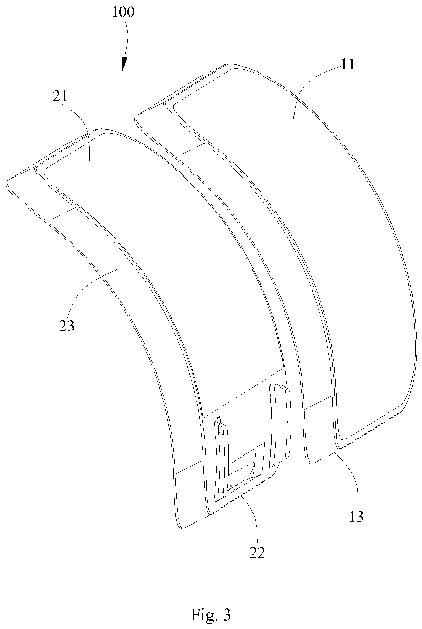

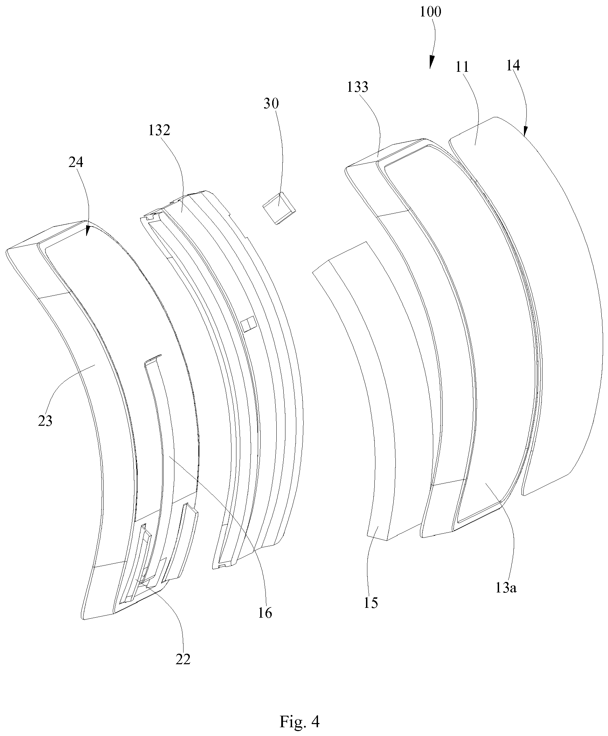

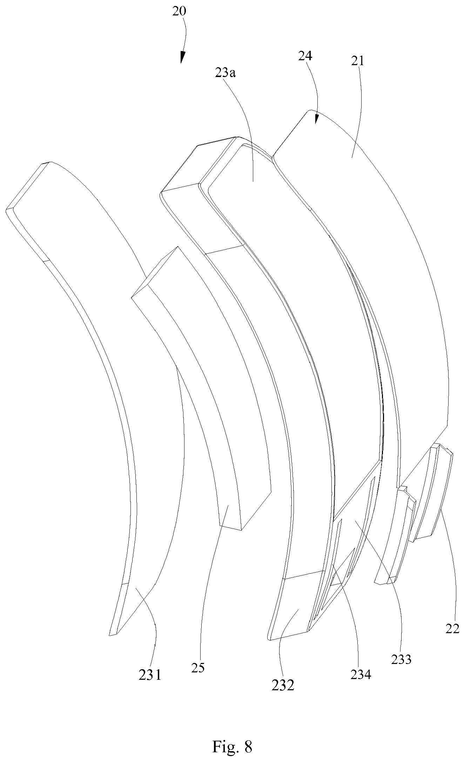

With reference to Figs. 1 to 9, an electronic device 100 according to embodiments of the present disclosure includes a first display module 10 and a second display module 20. The first display module 10 includes a first display surface 11. The second display module 20 includes a second display surface 21. The first display surface 11 and the second display surface 21 face the same side of the electronic device 100. The second display module 20 is slidably connected and stacked to the first display module 10. The electronic device 100 adjusts an area of a display surface 111 of the electronic device 100 formed by the first display surface 11 and the second display surface 21 by adjusting an overlapping degree between the second display module 20 and the first display module 10.

In the electronic device 100 according to embodiments of the present disclosure, since the first display module 10 is slidably connected and stacked to the second display module 20, and the area of the display surface of the electronic device 100 can be adjusted by adjusting the overlapping degree between the first display module 10 and the second display module 20, a size of the display area of the electronic device 100 is adjustable, such that the size of the display area of the electronic device 100 can be adjusted depending on specific requirements to meet different information display demands, thereby improving user experience.

In some examples, the second display module 20 is slidable relative to the first display module 10. During the sliding of the second display module 20 relative to the first display module 10, the overlapping degree between two display modules changes with relative sliding between the two display modules, thereby adjusting the area of the display surface 111 of the electronic device 100.

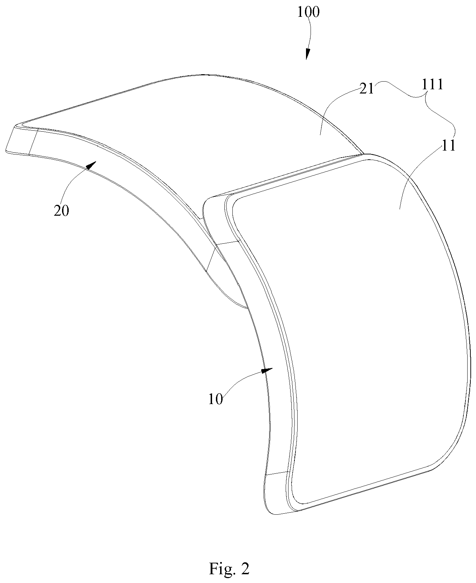

In the electronic device 100 shown in Fig. 1, the overlapping degree between the first display module 10 and the second display module 20 is maximum, and the first display module 10 completely covers the second display surface 21. In this case, the display surface 111 of the electronic device 100 formed by the first display surface 11 and the second display surface 21 may be understood as the first display surface 11. In the electronic device 100 shown in Fig. 2, the overlapping degree between the first display module 10 and the second display module 20 is minimum, and the second display surface 21 is completely exposed from the first display module 10. In this case, the display surface 111 of the electronic device 100 formed by the first display surface 11 and the second display surface 21 is the first display surface 11 plus the second display surface 21.

It could be understood that, in a process of switching the electronic device 100 shown in Fig. 1 to the electronic device 100 shown in Fig. 2, an area of the second display surface 21 exposed by the first display module 10 gradually increases, and the display surface 111 of the electronic device 100 formed by the first display surface 11 and the second display surface 21 is the first display surface 11 plus a part of the second display surface 21 exposed by the first display module 10.

In an embodiment, the first display surface 11 is as wide as the second display surface 21.

Thus, the display surface of the electronic device 100 formed by the first display surface 11 and the second display surface 21 is relatively neat in width dimension, which meets use requirements, and has comfortable visual experience.

In an embodiment, the first display module 10 includes a sliding slot 12. The second display module 20 includes a sliding rail 22. The sliding rail 22 is slidably disposed in the sliding slot 12 to adjust the overlapping degree.

Thus, the adjustment of the overlapping degree between the two display modules is achieved through a sliding fit way between the sliding rail 22 and the sliding slot 12, and the operation can be simplified because the arrangement of the fit way between the sliding rail 22 and the sliding slot 12 is simple and general.

In an embodiment, the first display module 10 includes a first cover 13. The first display surface 11 is disposed to the first cover 13. The sliding slot 12 is defined in two sides of a first bottom surface 131 of the first cover 13. The first bottom surface 131 of the first cover 13 faces away from the first display surface 11. The second display module 20 includes a second cover 23. The second display surface 21 is disposed to a top surface of the second cover 23. The sliding rail 22 is disposed to two sides of the top surface of the second cover 23. The sliding rail 22 is spaced apart from the second display surface 21.

Thus, the first cover 13 can support and protect the first display module 10. Furthermore, the sliding slot 12 is defined in the two sides of the first bottom surface 131 of the first cover 13, which occupies a small arrangement space. Moreover, by providing the sliding slot 22 at the two sides, the stability of the sliding rail 22 along the sliding slot 12 is enhanced. Meanwhile, the second cover 23 can support and protect the second display module 20, the sliding rail 22 and the second display surface 21 are disposed to the top surface of the second cover 23 at intervals, and the structure is compact without interference.

In an embodiment, the first display module 10 includes a first display screen 14. A top surface of the first cover 13 defines a first groove 13a therein. The first display screen 14 is received in the first groove 13a. The first display screen 14 includes the first display surface 11. The second display module 20 includes a second display screen 24. The top surface of the second cover 23 defines a second groove 23a therein. The second display screen 24 is received in the second groove 23a. The second display screen 24 includes the second display surface 21.

Thus, by receiving the display screen in the groove, the thickness of the electronic device 100 is reduced, facilitating miniaturization of the electronic device 100.

In embodiments of the present disclosure, the first cover 13 includes a first bottom plate 132 and a first outer casing 133. The first bottom plate 132 includes the first bottom surface 131 of the first cover 13, that is, the sliding slot 12 is defined in the first bottom plate 132. The first outer casing 133 includes the top surface of the first cover 13, that is, the first groove 13a is defined in the first outer casing 133. Thus, assembling of the first display module 10 is facilitated.

The first bottom plate 132 and the first outer casing 133 are connected to define a first receiving space 13b, and a related electrical component of the first display module 10, such as a circuit board, a battery, can be received in the first receiving space 13b. Thus, the receiving space increases an accommodating space of the first cover 13, and can prevent the electrical component from exposing, which otherwise affects the use function.

Specific structures of the related electrical components and connection among one another are not described herein in detail, which can refer to the prior art for details.

For instance, in an example, the related electrical component of the first display module 10 includes a printed circuit board 15, and the printed circuit board 15 is electrically connected to the first display screen 14.

The second cover 23 includes a second bottom plate 231 and a second outer casing 232. The second outer casing 232 includes the top surface of the second cover 23, that is, the second groove 23a is defined in the second outer casing 232. The second groove 23a and the first groove 13a substantially have the same shape.

The second bottom plate 231 and the second outer casing 232 are connected to define a second receiving space 23b. Related electrical components of the second display module 20, such as a circuit board, a battery, can be received in the second receiving space 23b.

For instance, in an example, the related electrical component of the second display module 20 includes a battery 25, such as a lithium battery. Thus, the first display module 10 and the second display module 20 both can be powered by the first battery 25, so as to facilitate carrying and improve practicality of the electronic device 100.

In an embodiment, the first display screen 14 and the second display screen 24 are each a flexible display screen 11, such as an organic-light-emitting-diode (OLED) display screen. Thus, the first display screen 14 and the second display screen have great mechanical property and bending capability.

In an embodiment, the electronic device 100 includes a flexible printed circuit board 16. The flexible printed circuit board 16 is electrically connected to the first display module 10 and the second display module 20.

Thus, two display modules can carry out signal transmission through the flexible printed circuit board 16, facilitating conformity of contents displayed by different display modules. Meanwhile, the flexible printed circuit board 16 is bendable. Thus, the flexible printed circuit board 16 is not easily damaged when the two display modules slide relative to each other, resulting in higher flexibility.

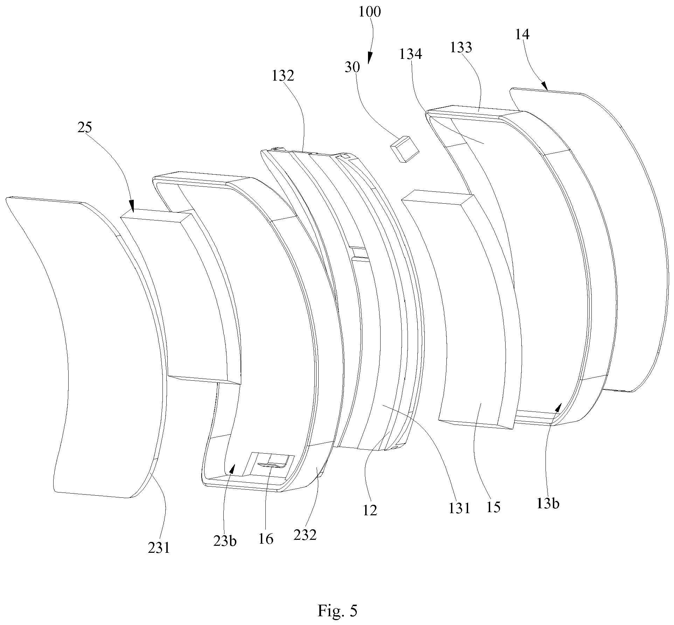

In embodiments of the present disclosure, the flexible printed circuit board 16 has a first end extending into the first receiving space 13b to connect the electrical components of the first display module 10, and a second end extending out of the first receiving space 13b and into the second receiving space 23b (as illustrated in Fig. 5) to connect the electrical components of the second display module 20.

The flexible printed circuit board 16 is located between the first display module 10 and the second display module 20.

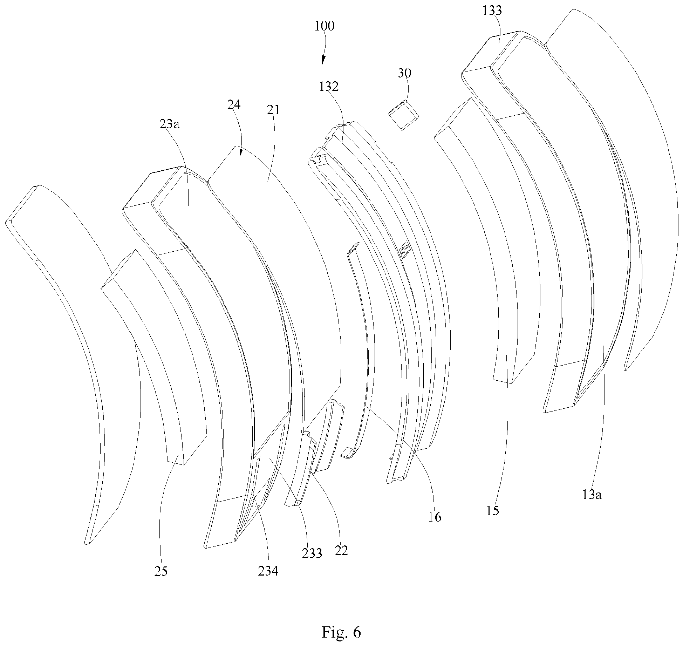

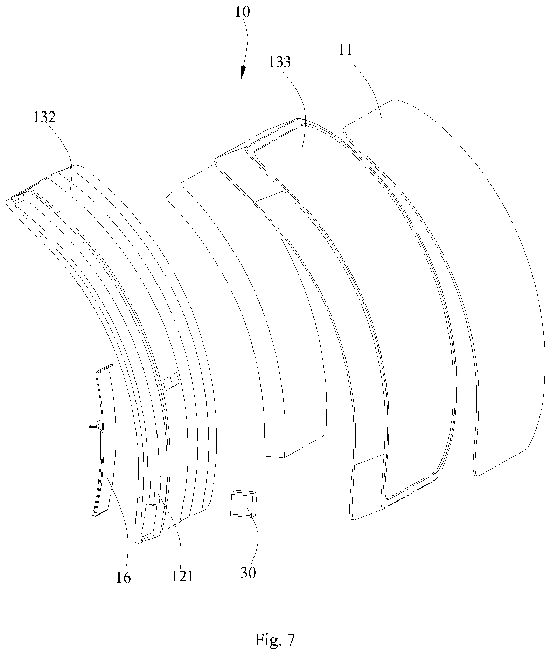

For instance, in an example, when the first display module 10 completely covers the second display module 20, the flexible printed circuit board 16 is completely unfolded and located between the two display modules, as illustrated in Fig. 6. When the two display modules relatively slide to a completely extended state, as illustrated in Fig. 7, the flexible printed circuit board 16 is maximally folded and located outside the second display surface 21. Thus, the flexible printed circuit board 16 does not affect the use of the second display surface 21.

It should note that, specific way of the signal transmission of the two display modules through the flexible printed circuit board 16 is not described in detail herein, which can refer to the prior art for details.

In an embodiment, the second cover 23 is provided with a mounting region 233. The mounting region 233 is disposed at a side of the second groove 23a. The sliding rail 22 is disposed to the mounting region 233.

Thus, the accommodating space of the second cover 23 is fully utilized, such that the structure of the second display module 20 is relatively compact, facilitating miniaturization design for the second display module 20.

In an embodiment, two side positions of the second cover 23 each define a mounting slot 234. The sliding rail 22 is partially fixed in the mounting slot 234. Thus, the sliding rail 22 has a fixed position, ensuring stability of the sliding of the sliding rail 22 along the sliding slot 12.

Specifically, the mounting slot 234 is located in the mounting region 233, the sliding rail 22 has a first end fixed in the mounting slot 234 and a second end mounted in the sliding slot 12, and a length of the sliding rail 22 is smaller than a length of the sliding slot 12. The sliding rail 22 can slide along a length direction of the sliding slot 12.

In an embodiment, the first display module 10 is a flexible display module and has a shape bent in a circular arc. The second display module 20 is a flexible display module and has a shape bent in a circular arc. A bending direction of the first display module 10 is the same with a bending direction of the second display module 20.

Thus, the two display modules are both bendable and have better suppleness and bending capability, thereby improving durability of the electronic device 100. Meanwhile, the consistent bending directions of the two display modules can ensure consistent orientations of the two display surfaces, thereby promoting the user experience.

In embodiments of the present disclosure, the flexible display module may refer to a display module including a flexible display screen.

When the bended first display module 10 and the bended second display module 20 are extended, the electronic device 100 of a ring shaped structure may be formed. Thus, the electronic device 100 of the ring shaped structure can be used as a smart wearable device, such as a smart wristband.

It should note that, in other embodiments, the first display module 10 and the second display module 20 may both be plate shaped. Thus, the two display modules are not limited to the shapes of embodiments of the present disclosure.

In an embodiment, a bending curvature of the first display module 10 is the same with a bending curvature of the second display module 20.

Thus, the process of the relative sliding of the two display modules is smooth, facilitating operability of the electronic device 100.

In an embodiment, the second display module 20 is slidable relative to the first display module 10 between a first position and a second position to adjust the overlapping degree. An area of the display surface 111 of the electronic device 100 formed by the first display surface 11 and the second display surface 21 when the second display module 20 is in the first position, is smaller than the area of the display surface 111 of the electronic device 100 formed by the first display surface 11 and the second display surface 21 when the second display module 20 is in the second position.

Thus, the second display module 20 slides between set positions relative to the first display module 10 to achieve adjustment of the overlapping degree, such that the overlapping degree can be adjusted. That is, the adjustment range of the overlapping degree can be limited by setting a distance between the two positions according to specific application situations. Meanwhile, the area of the display surface 111 of the electronic device 100 can change along with the change of the sliding position of the second display module 20, and this adjustment way is simple and easy to carry out.

Specifically, in embodiments of the present disclosure, the first position may be a position where the first display module 10 completely covers the second display surface 21, when the second display module 20 is in the first position, the area of the display surface 111 of the electronic device 100 formed by the first display surface 11 and the second display surface 21 is smallest, as illustrated in Fig. 1. The second position may be a position where the second display surface 21 is completely exposed from the first display module 10. When the second display module 20 is in the second position, the area of the display surface 111 of the electronic device 100 formed by the first display surface 11 and the second display surface 21 is largest, as illustrated in Fig. 2.

In some examples, the first display module 10 is located above the second display module 20. The second display module 20 is slidable relative to the first display module 10 between the first position and the second position. When performing adjustment of the overlapping degree between the second display module 20 and the first display module 10, the sliding rail 22 slides along the sliding slot 12, such that the second display module 20 is slidable relative to the first display module 10 between the first position and the second position.

For example, the first display surface 11 is located at the outermost side of the electronic device 100, and the second display surface 21 is located below the first display module 10. In the process of the relative sliding of the two display modules, the first display surface 11 is consistently completely exposed, i.e. the display area of the first display surface 11 is unchanged. The area of the display surface 111 of the electronic device 100 increases along with the increase of the area of the second display surface 21 exposed by the first display module 10.

When the second display module 20 is in the first position, the first display module 10 completely covers the second display module 20. In this case, the overlapping degree between the two display modules is the maximum, i.e. the electronic device 100 is in a retracted state. The area of the display surface of the electronic device 100 is equal to the area of the first display surface 11. When the second display module 20 is in the second position, the overlapping degree between the two display modules is the minimum, i.e. the electronic device 100 is in the extended state, and the area of the display surface of the electronic device 100 is equal to a sum of the area of the first display surface 11 and the area of the second display surface 21.

Thus, the different use state can be selected according to specific application environments. For example, when small amount of information needs to be displayed, the electronic device 100 can be made in the retracted state, i.e. displaying the information through a single screen (as illustrated in Fig. 1), so as to save the power; when large amount of information needs to be displayed, the electronic device 100 may be made in the extended state, i.e. displaying information through two screens (as illustrated in Fig. 2), so as to ensure the display effect.

It should note that, "above", "below", and "outermost side" refer to a position state of the electronic device 100 in a normal use state, such as a position state of the electronic device 100 illustrated in Fig. 1.

In an embodiment, the electronic device 100 includes a limiting member (not illustrated). The limiting member is configured to restrict a sliding stroke of the second display module 20 relative to the first display module 10.

Thus, the limiting member can limit a distance of the second display module sliding relative to the first display module, such that a range for the overlapping degree between the two display modules is adjustable, thereby improving the arrangeable space of the electronic device 100. Furthermore, the limiting member can reduce error rate of operating the relative sliding of the two display modules, and can effectively prevent the second display module 20 from completely sliding out or being damaged due to misoperation in the sliding process of the two display modules.

Specifically, for example, the limiting member may include a first limiting member and a second limiting member. The first limiting member and the second limiting member are located at two ends of the sliding slot 12, respectively. The sliding rail 22 slides in the sliding slot 12 defined between the first limiting member and the second limiting member, to ensure that the first display module 10 and the second display module 20 will not separate from each other in the sliding process.

In an embodiment, a display area of the first display surface 11 is greater than a display area of the second display surface 21.

Thus, the first display surface 11 may serve as a main display surface of the electronic device 100, and the second display surface 21 may serve as an auxiliary display surface of the electronic device 100.

For instance, in an example, the first display surface 11 is located at the outermost side, and the second display surface 21 is located below the first display module 10. The second display module 20 includes the mounting region 233 arranged at the same side of the second display module 20 as the second display surface 21 so as to arrange other components, such as the sliding rail 22 to be fitted in the sliding slot 12. In such an actual use environment, the display area of the first display surface 11 is larger than the display area of the second display surface 21, such that not only the display effect of the display surface of the electronic device 100 can be guaranteed, but also the space of the display module is fully utilized.

In an embodiment, the electronic device 100 includes a first sensor 30 and a controller 40. The first sensor 30 is configured to detect the overlapping degree between the second display module 20 and the first display module 10, and the controller 40 is configured to control a display content of the display surface of the electronic device 100 formed by the second display surface 21 and the first display surface 11.

Thus, the cooperation of the first sensor 30 and the controller 40 improves operational accuracy of the electronic device 100, enhances the degree of association of the two display modules, and meets intelligent requirements.

Specifically, in embodiments of the present disclosure, the first sensor 30 may be a distance sensor, a side of the sliding slot 12 defines a window 121 communicated with the sliding slot 12 (as illustrated in Fig. 7), and the first sensor 30 is disposed to an edge of the window 121. When the sliding rail 12 does not slide to the position of the window 121, a distance detected by the first sensor 30 is a first distance between the first sensor 30 and another side of the sliding slot 12. When the sliding rail 12 slides to the position of the window 121, the sliding rail 12 blocks in front of the first sensor 30, and a distance detected by the first sensor 30 is a second distance between the first sensor 30 and the sliding rail 22. The second distance is smaller than the first distance. Hence, the controller 40 can control the display content of the display surface 111 of the electronic device 100 formed by the first display surface 11 and the second display surface 22 depending on distance information fed back by the first sensor.

In an example, the position of the window 121 may be provided at a position of the sliding slot 12 corresponding to the sliding rail 22 in the sliding slot 12 when the overlapping degree of the second display module 20 relative to the first display module 10 is the minimum. In this case, the area of the display surface 111 of the electronic device 100 is the largest, the display surface 111 of the electronic device 100 formed by the first display surface 11 and the second display surface 21 can be seen as a single display surface of the electronic device 100. The first sensor 30 feeds back the second distance information to the controller 40, the controller 40 controls the display surface 111 of the electronic device 100 to display a first content depending on the second distance information, and the first content may be understood as an integral content displayed by a single display screen of a common electronic device, such as a home page of the electronic device 100, a display interface of an application program, etc.

When the first sensor 30 feeds back the first distance information to the controller 40, the controller 40 controls the first display surface 11 to display a second content, and controls the second display surface 21 to turn off. The second content and the first content may be the same content, but due to different display areas, the display effect is different, and the user experience is also different.

In another example, the first sensor 30 feeds back the second distance information to the controller 40, when the controller 40 controls the display surface 111 of the electronic device 100 to display a third content depending on the second distance information, the first display surface 11 may serve as the main display surface of the electronic device 100, and the second display surface 21 may serve as the auxiliary display surface of the electronic device 100. That is, the main part of the third content may be displayed in the first display surface 11, such as video information, and the auxiliary part of the third content may be displayed in the second display surface 21, such as related prompt message, etc., such that the display ways are diversified.

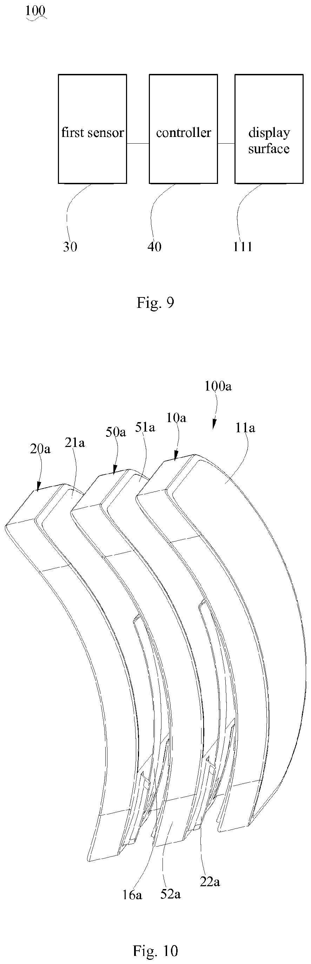

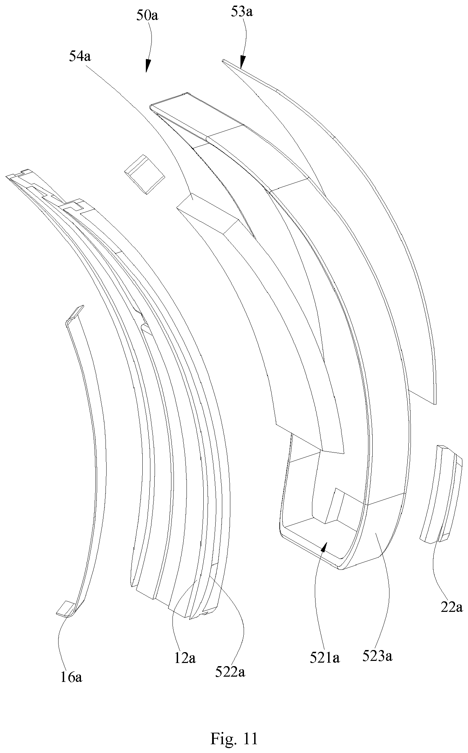

With reference to Figs. 10 and 11, in an embodiment, the electronic device 100a includes a third display module 50a, and the third display module 50a includes a third display surface 51a. the third display module 50a is slidably connected and stacked between the first display module 10a and the second display module 20a, the electronic device 100 is configured to adjust the area of the display surface of the electronic device 100 formed by the first display surface 11, the second display surface 21 and the third display surface 51a by adjusting an overlapping degree among the second display module 20a, the third display module 50a and the first display module 10a.

Thus, the third display surface 51a, the first display surface 11a and the second display surface 21a collectively form the display surface of the electronic device 100a, such that the area of the display surface of the electronic device 100a can be increased, and the display ways of the display surface of the electronic device 100a can be further diversified, so as to promote the user experience.

In an embodiment, the first display module 10a is slidably connected to the third display module 50a by means of fitting a sliding slot with a sliding rail, and the second display module 20a is slidably connected to the third display module 50a by means of fitting another sliding slot with another sliding rail.

Specifically, the third display surface 51a, the first display surface 11a and the second display surface 21a all face the same side of the electronic device 100a. The third display module 50a includes a third cover 52a and a third display screen 53a. A top surface of the third cover 52a defines a third groove (which is not illustrated and can refer to the second groove 23a). The third display screen 53a is disposed in the third groove.

The third display screen 53a includes the third display surface 51a. The third cover 52a is provided with the sliding slot 12a and the sliding rail 22a, and the sliding slot 12a and the sliding rail 22a are disposed to two surfaces of the third cover 52a opposite to each other, respectively. The third display module 50a can be slidably connected and stacked to the first display module 10a through fitting the sliding rail 22a into the sliding slot of the first display module 10a, and the third display module 50a can be slidably connected and stacked to the second display module 20a through fitting the sliding slot 12a with the sliding rail of the second display module 20a. That is, in embodiments of the present disclosure, connection between the third display module 50a and the first display module 10a as well as connection between the third display module 50a and the second display module 20a are both realized through fitting the sliding slot 12a with the sliding rail 22a. Specific connection way between the third display module 50a and the first display module 10a as well as specific connection way between the third display module 50a and the second display module 20a are not described in detail herein, which can refer to the connection way between the first display module 10 and the second display module 20 described above for details.

The electronic device 100 can adjust the area of the display surface of the electronic device 100a collectively formed by the third display surface 51a, the first display surface 11a and the second display surface 21a by adjusting the overlapping degree between the third display module 50a and the second display module 20a or the overlapping degree between the third display module 50a and the first display module 10a, thereby achieving purpose of different display effects, such as three-screen display, or the like. Specific adjustment way is not described in detail herein, which can refer to the adjustment way between the first display module 10 and the second display module 20 for details.

In an embodiment, the third display screen 53a is a flexible display screen 11, such as an organic-light-emitting-diode (OLED) display screen.

In an embodiment, the third cover 52a defines a third receiving space 521a therein. Related electrical components of the third display module 50a, such as a circuit board, a battery, can be received in the third receiving space 521a. Thus, the receiving space improves accommodating space of the third cover 52a, and can prevent the electrical component from exposing, which otherwise affects the use function.

In some embodiments, the related electric components include a second battery 54a, such as a lithium battery. Thus, the three display modules can all be powered by the second battery 54a, so as to facilitate carrying and enhance practicality of the electronic device 100a.

It should note that, the first battery 25 and the second battery 54 can employ the same battery, such as the same lithium battery.

In an embodiment, the third cover 52a includes a third bottom plate 522a, and a third outer casing 523a. The third outer casing 523a includes the top surface of the third cover 52a, that is, the third display screen 53a is disposed to the third outer casing 523a. The third bottom plate 522a and the third outer casing 523a are connected to define the third receiving space 521a.

In an embodiment, the electronic device 100 includes a flexible printed circuit board 16a. The flexible printed circuit board 16a is electrically connected to the first display module 10a, the second display module 20a and the third display module 50a. Thus, three display modules can carry out signal transmission through the flexible printed circuit board 16a, facilitating conformity of contents displayed by different display modules. Meanwhile, the flexible printed circuit board 16a is bendable. Thus, the flexible printed circuit board 16a is not easily damaged when the three display modules slide relative to one another, resulting in higher flexibility.

It should note that, the control for the display content of the display surface of the electronic device 100a can be achieved by also employing the combination way of the first sensor 30 and the controller 40 among the third display module 50a, the first display module 10a, and the second display module 20a, which is not described in detail herein, and can refer to the above-described embodiments for detail.

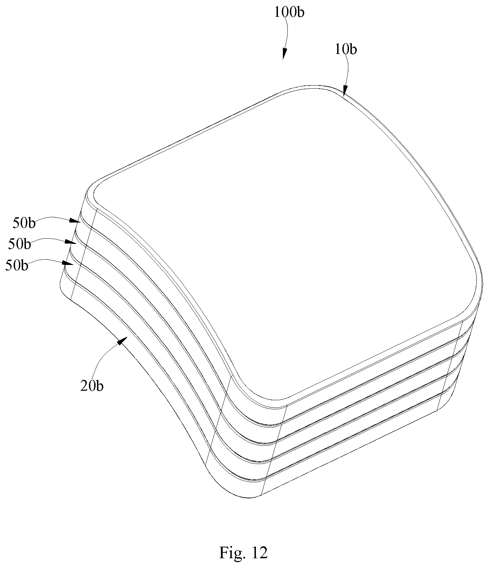

With reference to Figs. 12 to 15, in some examples, the electronic device 100b includes one first display module 10b, one second display module 20b and three third display modules 50b. The third display modules 50b are slidably connected and stacked between the first display module 10b and the second display module 20b. The three third display modules 50b are slidably connected and stacked.

Thus, the area of the display surface of the electronic device 100b is increased, and the use of the electronic device 100b is diversified.

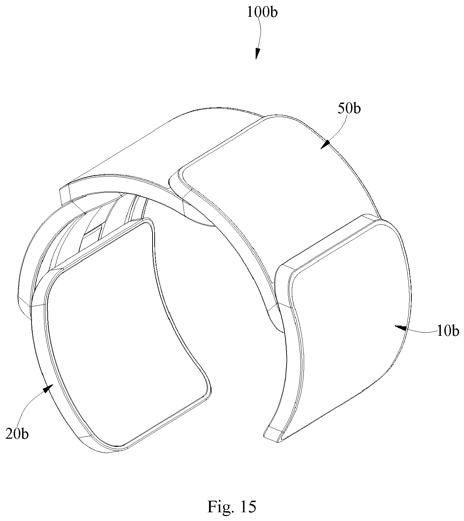

For instance, in an example, the five display modules of the electronic device 100b are all flexible display modules. When the five display modules are in the completely retracted state, the electronic device 100b in a single screen display state (as illustrated in Fig. 12), the electronic device 100b can be used as a general electronic component having a single screen display function, such as a mobile phone. When the five display modules are in a completely extended state, the electronic device 100b is in a ring shape (as illustrated in Fig. 15), that is, the five display modules form a ring shaped structure, such that the electronic device 100b may be worn on a wrist as a wearable device. In this case, detection of related information can be achieved through the electronic device 100b.

For instance, in an example, the electronic device 100 includes a second sensor (not shown), such as a pressure sensor. The electronic device 100 can detect and collect health data related to the user through the second sensor, such as heart rate or blood pressure, and also can display corresponding test results through the display surface of the electronic device 100b, so as to prompt the user.

It should be noted that the specific way of implementing the detection of the related information by the electronic device 100 is not described in detail herein, and the related art can be referred to for details. Moreover, other ways of implementing human-computer interaction by the wearable device may also be applied to the electronic device 100 according to the embodiment of the present disclosure.

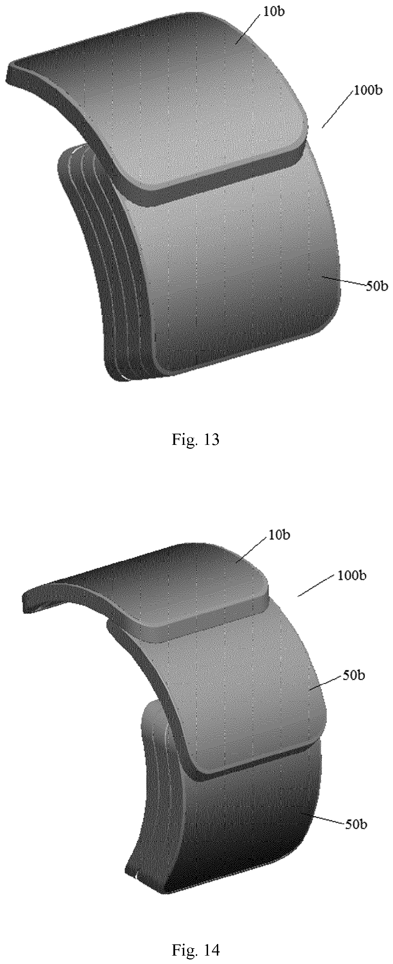

Meanwhile, the electronic device 100b can also achieve other display states, such as double-screen display (as illustrated in Fig. 13), three-screen display (as illustrated in Fig. 14), UI animation, etc., by adjusting the relative position relationship among the five display modules. That is, multiple use functions can be achieved according to specific application environments.

In the description of the present disclosure, a structure in which a first feature is "on" or "beneath" a second feature may include an embodiment in which the first feature directly contacts the second feature, and may also include an embodiment in which an additional feature is formed between the first feature and the second feature so that the first feature does not directly contact the second feature, unless otherwise specified. Furthermore, a first feature "on," "above," or "on top of' a second feature may include an embodiment in which the first feature is right "on," "above," or "on top of' the second feature, and may also include an embodiment in which the first feature is not right "on," "above," or "on top of' the second feature, or just means that the first feature has a sea level elevation larger than the sea level elevation of the second feature. While first feature "beneath," "below," or "on bottom of' a second feature may include an embodiment in which the first feature is right "beneath," "below," or "on bottom of' the second feature, and may also include an embodiment in which the first feature is not right "beneath," "below," or "on bottom of' the second feature, or just means that the first feature has a sea level elevation smaller than the sea level elevation of the second feature.

The following disclosure provides many different embodiments or examples to realize different structures of the present disclosure. To simplify the disclosure of the present disclosure, components and configurations in particular examples are elaborated. Of course, they are illustrative, and are not intended to limit the present disclosure. Moreover, reference numbers and/or letters may be repeated in different examples of the present disclosure for the purpose of simplicity and clarity, which shall not be constructed to indicate the relationships among various embodiments and/or configurations. In addition, the present disclosure provides examples of various specific processes and materials, but applicability of other processes and/or utilization of other materials are conceivable for those skilled in the art.

Reference throughout this specification to "an embodiment", "some embodiments", "one embodiment", "another example", "an example", "a specific example" or "some examples" means that a particular feature, structure, material, or characteristic described in connection with the embodiment or example is included in at least one embodiment or example of the present disclosure. Thus, the appearances of the phrases in various places throughout this specification are not necessarily referring to the same embodiment or example of the present application. Furthermore, the particular features, structures, materials, or characteristics may be combined in any suitable way in one or more embodiments or examples.

Although embodiments of the present disclosure have been shown and illustrated, it shall be understood by those skilled in the art that various changes, modifications, alternatives and variants without departing from the principle of the present disclosure are acceptable. The scope of the present disclosure is defined by the claims or the like.

## Claims

1. An electronic device, comprising:
a first display module comprising a first display surface; and
a second display module comprising a second display surface, the first display surface and the second display surface facing the same side of the electronic device, the second display module being slidably connected and stacked to the first display module, the electronic device being configured to adjust an area of a display surface of the electronic device formed by the first display surface and the second display surface by adjusting an overlapping degree between the second display module and the first display module.

2. The electronic device according to claim 1, wherein the first display module comprises a sliding slot, the second display module comprises a sliding rail, and the sliding rail is slidably received in the sliding slot to adjust the overlapping degree.

3. The electronic device according to claim 2, wherein the first display module comprises a first cover, the first display surface is located at the first cover, the sliding slot is defined in two sides of a bottom surface of the first cover, and the bottom surface of the first cover faces away from the first display surface; and
the second display module comprises a second cover, the second display surface is located at a top surface of the second cover, the sliding rail is located at two sides of the top surface of the second cover, and the sliding rail is spaced apart from the second display surface.

4. The electronic device according to claim 3, wherein the first display module comprises a first display screen, a top surface of the first cover defines a first groove therein, the first display screen is received in the first groove, and the first display screen comprises the first display surface; and
the second display module comprises a second display screen, the top surface of the second cover defines a second groove therein, the second display screen is received in the second groove, and the second display screen comprises the second display surface.

5. The electronic device according to claim 1, wherein the electronic device comprises a flexible printed circuit board, and the flexible printed circuit board is electrically connected to the first display module and the second display module.

6. The electronic device according to claim 4, wherein the second cover comprises a mounting region located at a side of the second groove, and the sliding rail is located at the mounting region.

7. The electronic device according to claim 1, wherein the first display module is a flexible display module and has a shape bent in a circular arc, and the second display module is a flexible display module and has a shape bent in a circular arc; and
a bending direction of the first display module is the same with a bending direction of the second display module.

8. The electronic device according to claim 7, wherein a bending curvature of the first display module is the same with a bending curvature of the second display module.

9. The electronic device according to claim 7, wherein the second display module is slidable between a first position and a second position relative to the first display module to adjust the overlapping degree, and the area of the display surface of the electronic device formed by the first display surface and the second display surface when the second display module is in the first position, is smaller than the area of the display surface of the electronic device formed by the first display surface and the second display surface when the second display module is in the second position.

10. The electronic device according to claim 1, wherein a display area of the first display surface is larger than a display area of the second display surface.

11. The electronic device according to claim 1, wherein the electronic device comprises a sensor and a control device, the sensor is configured to detect the overlapping degree between the second display module and the first display module, and the control device is configured to control a display content of the display surface of the electronic device formed by the second display surface and the first display surface according to the overlapping degree.

12. The electronic device according to claim 1, wherein the electronic device comprises a third display module, and the third display module comprises a third display surface,
the third display module is slidably connected and stacked between the first display module and the second display module, the electronic device is configured to adjust an area of a display surface of the electronic device formed by the first display surface, the second display surface and the third display surface by adjusting overlapping degree among the second display module, the third display module and the first display module.

13. The electronic device according to claim 12, wherein the first display module is slidably connected to the third display module by fitting a sliding slot with a sliding rail; and
the second display module is slidably connected to the third display module by means fitting another sliding slot with another sliding rail.
